# EUROPÄISCHE PATENTANMELDUNG

(11) **EP 4 335 795 A1**
(43) Veröffentlichungstag der Anmeldung: **13.03.2024**
(21) Anmeldenummer: 23195084.1
(22) Anmeldetag: 04.09.2023
(51) Int. Cl.: B65G 47/86, B65G 49/05

(54) **VORRICHTUNG ZUM HALTEN EINES BEHÄLTERS**

(30) Priorität: 09.09.2022 DE 102022122939
(71) Anmelder: KRONES AG, 93073 Neutraubling (DE)
(72) Erfinder: SCHOENFELDER, Markus, 93073 Neutraubling (DE)
(74) Vertreter: v. Bezold & Partner Patentanwälte - PartG mbB

(57) **Zusammenfassung**

Die Erfindung betrifft u.a. eine Vorrichtung (12) zum Halten eines Behälters (14) für eine Behältertransport- und/oder Behälterbehandlungsvorrichtung (10). Die Vorrichtung (12) weist ein Führungselement (16), eine Behälterhalterung (24), eine erste Übertragungseinrichtung (18), eine zweite Übertragungseinrichtung (22) und einen Verbinder (20) auf. Der Verbinder (20) weist mindestens ein Verbindungselement (42) auf, das in eine Verbindungsstellung bewegbar ist, in der der Verbinder (20) die erste Übertragungseinrichtung (18) und die zweite Übertragungseinrichtung (22) zum Herstellen einer Wirkverbindung von dem Führungselement (16) zu der Behälterhalterung (24) miteinander verbindet, und in eine Freigabestellung bewegbar ist, in der der Verbinder (20) die erste Übertragungseinrichtung (18) und die zweite Übertragungseinrichtung (22) zur Demontage voneinander entkoppelt. Vorteilhaft kann die Vorrichtung (12) eine Montage und Demontage wesentlich vereinfachen.

## Beschreibung

### Technisches Gebiet

Die Erfindung betrifft eine Vorrichtung zum Halten eines Behälters, eine Behältertransport- und/oder Behälterbehandlungsvorrichtung mit einer Vorrichtung zum Halten eines Behälters und ein Verfahren zum Montieren oder Demontieren einer Vorrichtung zum Halten eines Behälters.

### Technischer Hintergrund

Die DE 10 2020 114 905 A1 betrifft eine Vorrichtung zum Halten eines Behälters in einer Behälterbehandlungsvorrichtung, umfassend zwei in einer Schwenkebene relativ zueinander schwenkbare Greifarme, welche jeweils einen Halteabschnitt zum Halten des zu haltenden Behälters aufweisen. Eine Hubstange ist derart mit den Greifarmen gekoppelt, dass durch ein Verschieben der Hubstange senkrecht zur Schwenkebene der Greifarme die Halteabschnitte relativ zueinander verschwenkbar sind. Die Greifarme sind jeweils um eine Schwenkachse, ausgebildet über eine mechanische Welle, schwenkbar an einer Halterung angeordnet.

Nachteilig an der bekannten Vorrichtung kann die sehr aufwendige Montage und Demontage sowie die kaum bis gar nicht mögliche Feineinstellung der Vorrichtung sein.

Der Erfindung liegt die Aufgabe zu Grunde, eine verbesserte Vorrichtung zum Halten eines Behälters zu schaffen, mit der vorzugsweise eine deutlich erleichterte Montage und Demontage möglich sein soll.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Vorrichtung zum Halten eines Behälters für eine Behältertransport- und/oder Behälterbehandlungsvorrichtung (z. B. eine Verschließvorrichtung zum Verschließen von Behältern). Die Vorrichtung weist ein Führungselement zum Folgen einer Steuerkurve der Behältertransport- und/oder der Behälterbehandlungsvorrichtung auf (, wobei vorzugsweise das Führungselement elastisch gegen die Steuerkurve vorspannbar ist). Die Vorrichtung weist eine (z. B. aktiv betätigbare) Behälterhalterung, vorzugsweise Neckhandling-Behälterhalterung, zum Halten des Behälters auf. Die Vorrichtung weist eine erste Übertragungseinrichtung, die (z. B. direkt) mit dem Führungselement verbunden ist, auf. Die Vorrichtung weist eine zweite Übertragungseinrichtung, die (z. B. direkt) mit der Behälterhalterung verbunden ist, auf. Die Vorrichtung weist einen Verbinder zum Verbinden der ersten Übertragungseinrichtung und der zweiten Übertragungseinrichtung auf. Der Verbinder weist mindestens ein Verbindungselement auf, das in eine Verbindungsstellung bewegbar ist, in der der Verbinder die erste Übertragungseinrichtung und die zweite Übertragungseinrichtung zum Herstellen einer Wirkverbindung von dem Führungselement zu der Behälterhalterung (z. B. zum Betätigen (z. B. Öffnen und/oder Schließen) der Behälterhalterung mittels des Führungselements) miteinander verbindet. Das mindestens ein Verbindungselement ist zudem in eine Freigabestellung bewegbar, in der der Verbinder die erste Übertragungseinrichtung und die zweite Übertragungseinrichtung zur Demontage voneinander entkoppelt.

Vorteilhaft ermöglicht die Vorrichtung eine verbesserte Montage und Demontage der Vorrichtung. Im Einzelnen kann vorzugsweise eine Baugruppe aus dem Verbinder, der zweiten Übertragungseinrichtung und der Behälterhalterung vormontiert und dann als Ganzes an die bereits in der Behältertransport- und/oder Behälterbehandlungsvorrichtung montierte erste Übertragungseinrichtung, die vorzugsweise bereits feineingestellt ist, montiert werden. Die Vormontage der Baugruppe kann einen Aufwand bei der Montage erheblich reduzieren und zudem wesentlich genauer durchgeführt werden. Gleichermaßen kann die Baugruppe als Ganzes demontiert werden. Der Verbinder ermöglicht in diesem Zusammenhang eine Schnellanbindung zur Montage und eine Schnellentkopplung zur Demontage. Letztlich kann damit eine Inbetriebnahme der Behältertransport- und/oder Behälterbehandlungsvorrichtung erheblich vereinfacht und beschleunigt werden. Zudem können geringe Toleranzen erreicht werden, was sich bspw. positiv auf eine Lebensdauer der Komponenten und eine Qualität der behandelten Behälter auswirken kann.

In einem Ausführungsbeispiel ist das mindestens eine Verbindungselement zum Einnehmen der Verbindungsstellung elastisch vorgespannt (z. B. bewirkt durch mindestens ein elastisches Element und/oder durch eine Materialelastizität des mindestens einen Verbindungselements). Alternativ oder zusätzlich kann der Verbinder selbstsichernd zum Halten des mindestens einen Verbindungselements in der Verbindungsstellung sein. Vorteilhaft kann damit eine Montage und ein sicherer Betrieb der Vorrichtung weiter unterstützt werden.

In einem weiteren Ausführungsbeispiel ist der Verbinder als ein Formschlussverbinder, ein Rastverbinder, ein Klauenverbinder oder ein Schnappverbinder (z. B. segmentierter Ringschnappverbinder oder Spannhülse) ausgeführt. Alternativ oder zusätzlich ist das mindestens eine Verbindungselement als ein Rastelement, ein Schnappelement oder ein Klauenelement ausgeführt. Alternativ oder zusätzlich ist der Verbinder als ein, vorzugsweise werkzeuglos betätigbarer, Schnellverbinder ausgeführt. Vorteilhaft kann damit eine einfache und zugleich zuverlässige Konstruktion des Verbinders gewährleistet werden.

In einem weiteren Ausführungsbeispiel weist eine von der ersten Übertragungseinrichtung und der zweiten Übertragungseinrichtung ein Gegenstück zum Ineinandergreifen mit dem mindestens einen Verbindungselement in der Verbindungsstellung des mindestens einen Verbindungselements auf. Optional kann der Verbinder an einem (z. B. oberen oder unteren) Ende der anderen von der der ersten Übertragungseinrichtung und der zweiten Übertragungseinrichtung angeordnet sein.

In einem weiteren Ausführungsbeispiel weist das Gegenstück eine, vorzugsweise umlaufende, Nut zum Eingreifen für das mindestens eine Verbindungselement auf. Alternativ oder zusätzlich ist das Gegenstück an einem (z. B. unteren) Ende der ersten Übertragungseinrichtung oder an einem (z. B. oberen Ende) der zweiten Übertragungseinrichtung angeordnet. Alternativ oder zusätzlich ist das Gegenstück zumindest abschnittsweise konusförmig oder pilzförmig. Alternativ oder zusätzlich verjüngt sich das Gegenstück zu seinem freien Ende (bzw. zum Verbinder) hin, vorzugsweise spitz zulaufend. Vorteilhaft kann damit eine einfache, verschleißarme und zugleich zuverlässige Konstruktion des Gegenstücks gewährleistet werden.

In einem weiteren Ausführungsbeispiel weist das mindestens eine Verbindungselement mehrere (z. B. zwei, drei oder vier) Verbindungselemente auf, die, vorzugsweise gleichmäßig bzw. äquidistant, um einen Umfang des Verbinders herum verteilt angeordnet sind. Vorzugsweise kann das Gegenstück radial innen von den mehreren Verbindungselementen zum Ineinandergreifen mit den mehreren Verbindungselementen positionierbar sein. Vorteilhaft kann damit einerseits eine sichere Verbindung zwischen dem Verbinder und dem Gegenstück ermöglicht werden. Andererseits kann eine Positionierung des Gegenstücks im bzw. am Verbinder erleichtert werden.

In einer Ausführungsform kann die Vorrichtung ferner ein Löseelement (bzw. Entriegelungselement), vorzugsweise eine manuell betätigbare Zugstange, aufweisen, wobei das Löseelement mit dem Verbinder zum Bewegen des mindestens einen Verbindungselements in die Freigabestellung verbindbar ist. Vorteilhaft kann damit eine einfache Entkopplung und damit Demontage der Baugruppe ermöglicht werden.

In einer weiteren Ausführungsform weist die Vorrichtung ferner ein Montageelement, vorzugsweise eine Montageplatte, zum Montieren an einem Träger der Behältertransport- und/oder Behälterbehandlungsvorrichtung auf. Vorzugsweise kann das Montageelement die zweite Übertragungseinrichtung und/oder die Behälterhalterung tragen (bzw. lagern). Alternativ oder zusätzlich kann das Montageelement ein Durchgangsloch aufweisen, durch das das Löseelement zugängig ist, wobei vorzugsweise eine Längsachse des Löseelements mit dem Durchgangsloch fluchtet. Vorteilhaft kann damit ein Zugang zum Löseelement ermöglicht werden, z. B. auch in Anwendungen, in denen das Löseelement in einem sogenannten Grauraum angeordnet ist.

In einer weiteren Ausführungsform weist die Vorrichtung ferner ein Verschlusselement auf, mit dem das Durchgangsloch abdeckbar oder verschließbar ist. Vorzugsweise kann das Löseelement durch das Durchgangsloch zugängig sein, wenn das Durchgangsloch frei von dem Verschlusselement ist. Alternativ oder zusätzlich kann das Verschlusselement ein Befestigungselement, vorzugsweise eine Befestigungsschraube, mit dem das Montageelement an dem Träger befestigbar ist, sein. Alternativ oder zusätzlich kann das Verschlusselement im Einbauzustand (z. B. beim Abdecken oder Verschließen des Durchgangslochs) das Löseelement axial sichern (z. B. direkt oder mittelbar), sodass bevorzugt beim Entfernen des Verschlusselements von dem Durchgangsloch das Löseelement schwerkraftbedingt mit einem unteren Abschnitt sich hin zu, in oder durch das Durchgangsloch hindurch bewegt (z. B. bis ein oberer Abschnitt des Löseelements den Verbinder kontaktiert). Vorteilhaft kann das Verschlusselement damit mehrere Funktionen in sich integrieren.

In einer weiteren Ausführungsform weist die erste Übertragungseinrichtung ein Verbindungsgestänge, vorzugweise ein Verbindungshubgestänge, auf. Alternativ oder zusätzlich weist die zweite Übertragungseinrichtung eine Hubstange und ein Getriebe zum Wandeln einer Axialbewegung der Hubstange zu einer Schwenkbewegung der Behälterhalterung auf. Alternativ oder zusätzlich sind die erste Übertragungseinrichtung, der Verbinder und die zweite Übertragungseinrichtung nacheinander entlang einer Achse, vorzugsweise einer Vertikalachse, angeordnet, vorzugweise mit der ersten Übertragungseinrichtung oberhalb von dem Verbinder und der zweiten Übertragungseinrichtung. Alternativ oder zusätzlich weist die Behälterhalterung zwei gegensinnig zueinander bewegbare, vorzugsweise verschwenkbare und/oder verschiebbare, Klammerarme um Halten des Behälters auf (z. B. betätigbar mittels der Wirkverbindung).

In einer Ausführungsvariante weist mindestens eine von der ersten Übertragungseinrichtung und der zweiten Übertragungseinrichtung einen Verstellmechanismus zum Verstellen einer Axiallänge der mindestens einen von der ersten Übertragungseinrichtung und der zweiten Übertragungseinrichtung auf. Vorteilhaft kann damit ein Längeneinstellbarkeit für eine Feineinstellung zum Minimieren von Toleranzen nach der Montage ermöglicht werden.

In einer weiteren Ausführungsvariante weist die Vorrichtung ferner ein, vorzugsweise nach unten offenes, Positionierelement zum relativen Positionieren des Verbinders und eines Gegenstücks für den Verbinder zueinander bei einer Montage der Vorrichtung auf. Vorzugsweise kann das Positionierelement rohrförmig oder kanalförmig sein. Alternativ oder zusätzlich kann das Positionierelement den Verbinder und/oder die zweite Übertragungseinrichtung umgeben. Alternativ oder zusätzlich kann der Verbinder, das Gegenstück und/oder die zweite Übertragungseinrichtung bei der Montage in das Positionierelement einführbar sein. Alternativ oder zusätzlich kann das Positionierelement koaxial zu dem Gegenstück, zu dem Verbinder und/oder zu der ersten Übertragungseinrichtung angeordnet sein. Alternativ oder zusätzlich kann ein Löseelement zum Entkoppeln des Verbinders in oder an einer Wand (z. B. Rohrwand) des Positionierelements geführt sein. Vorteilhaft kann damit die Montage der Baugruppe durch den Einsatz des Positionierelements weiter erleichtert werden.

In einer weiteren Ausführungsvariante sind die zweite Übertragungseinrichtung und die Behälterhalterung zusammen als eine Baugruppe mittels des Verbinders an die erste Übertragungseinrichtung montierbar und/oder von der ersten Übertragungseinrichtung demontierbar, vorzugsweise zusammen mit dem Verbinder oder einem Gegenstück für den Verbinder.

Ein weiterer Aspekt der vorliegenden Offenbarung betrifft eine (z. B. Rundläufer-) Behältertransport- und/oder (z. B. Rundläufer-) Behälterbehandlungsvorrichtung, vorzugsweise Verschließvorrichtung zum Verschließen von Behältern, aufweisend eine, vorzugsweise (z. B. vollständig oder abschnittsweise) umlaufende, Steuerkurve und mindestens eine Vorrichtung zum Halten eines Behälters wie hierin offenbart. Das Führungselement der mindestens einen Vorrichtung ist entlang der Steuerkurve geführt, vorzugsweise elastisch gegen die Steuerkurve vorgespannt. Vorteilhaft können mit der Behältertransport- und/oder Behälterbehandlungsvorrichtung die gleichen Vorteile erzielt werden, die bereits unter Bezugnahme auf die Vorrichtung zum Halten des Behälters erläutert wurden.

Vorzugsweise können mehrere Vorrichtungen zum Halten eines Behälters wie hierin offenbart umfasst sein, die bspw. um einen Umfang der Behältertransport- und/oder Behälterbehandlungsvorrichtung herum verteilt angeordnet sind, z. B. äquidistant.

Bevorzugt kann die Vorrichtung zum Halten oder die Behältertransport- und/oder Behälterbehandlungsvorrichtung in einer Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, umfasst sein.

Beispielsweise können die Behälter als Flaschen, Dosen, Kanister, Kartons, Flakons usw. ausgeführt sein.

Ein weiterer Aspekt der vorliegenden Offenbarung betrifft ein Verfahren zum Montieren und/oder Demontieren einer Vorrichtung zum Halten eines Behälters wie hierin offenbart. Das Verfahren kann ein Montieren einer (z. B. vormontierten) Baugruppe aus dem Verbinder, der zweiten Übertragungseinrichtung und der Behälterhalterung als Ganzes an ein Gegenstück der ersten Übertragungseinrichtung, die (z. B. zusammen mit dem Führungselement) bereits in einer Behältertransport- und/oder Behälterbehandlungsvorrichtung montiert ist, mittels Verbinden des Verbinders mit dem Gegenstück aufweisen. Alternativ kann das Verfahren ein Montieren einer (z. B. vormontierten) Baugruppe aus einem Gegenstück für den Verbinder, der zweiten Übertragungseinrichtung und der Behälterhalterung als Ganzes an den Verbinder, der (z. B. zusammen mit der ersten Übertragungseinrichtung und dem Führungselement) bereits in einer Behältertransport- und/oder Behälterbehandlungsvorrichtung montiert ist, mittels Verbinden des Verbinders mit dem Gegenstück aufweisen.

Alternativ oder zusätzlich kann das Verfahren ein Demontieren einer (z. B. vormontierten) Baugruppe aus dem Verbinder, der zweiten Übertragungseinrichtung und der Behälterhalterung als Ganzes von einem Gegenstück der ersten Übertragungseinrichtung, die noch (z. B. zusammen mit dem Führungselement) in einer Behältertransport- und/oder Behälterbehandlungsvorrichtung montiert ist, mittels Entkoppeln des Verbinders von dem Gegenstück aufweisen. Alternativ kann das Verfahren ein Demontieren einer (z. B. vormontierten) Baugruppe aus einem Gegenstück für den Verbinder, der zweiten Übertragungseinrichtung und der Behälterhalterung als Ganzes von dem Verbinder, der noch (z. B. zusammen mit der ersten Übertragungseinrichtung und dem Führungselement) in einer Behältertransport- und/oder Behälterbehandlungsvorrichtung montiert ist, mittels Entkoppeln des Verbinders von dem Gegenstück aufweisen.

Vorzugsweise kann das Verfahren ferner ein Führen des Verbinders oder des Gegenstücks mittels eines, vorzugsweise nach unten offenen, Positionierelements während des Montierens oder des Demontierens aufweisen. Das Positionierelement kann bspw. wie hierin offenbart ausgeführt sein.

Bevorzugt kann ein Entkoppeln des Verbinders mittels eines Löseelements erfolgen. Das Löseelement kann bspw. wie hierin offenbart ausgeführt sein.

Vorzugsweise kann das Demontieren zusätzlich ein Lösen eines Montageelements der zweiten Übertragungseinrichtung von einem Träger der Behältertransport- und/oder Behälterbehandlungsvorrichtung aufweisen. Das Montageelement kann bspw. wie hierin offenbart ausgeführt sein.

Optional kann das Lösen des Löseelements durch ein Durchgangsloch des Montageelements hindurch erfolgen.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine Schnittansicht einer nur teilweise dargestellten Behälterbehandlungsvorrichtung mit einer Vorrichtung zum Halten eines Behälters gemäß einem Ausführungsbeispiel der vorliegenden Offenbarung;
- Figur 2: eine perspektivische Ansicht einer Baugruppe der beispielhaften Vorrichtung zum Halten eines Behälters;
- Figur 3: eine perspektivische Ansicht einer Baugruppe der beispielhaften Vorrichtung zum Halten eines Behälters;
- Figur 4: eine Schnittdarstellung eines Abschnitts der beispielhaften Vorrichtung in einem Einbauzustand;
- Figur 5: eine Schnittdarstellung eines Verbinders der beispielhaften Vorrichtung;
- Figur 6: eine Schnittdarstellung des Abschnitts von Figur 4 zu Beginn einer Demontage der Baugruppe von Figur 2;
- Figur 7: eine Schnittdarstellung des Abschnitts von Figur 4 während einer Demontage der Baugruppe von Figur 2;
- Figur 8: eine Schnittdarstellung des Abschnitts von Figur 4 während einer Demontage der Bau-gruppe von Figur 2; und
- Figur 9: eine Schnittdarstellung des Abschnitts von Figur 4 nach einer Demontage der Bau-gruppe von Figur 2.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

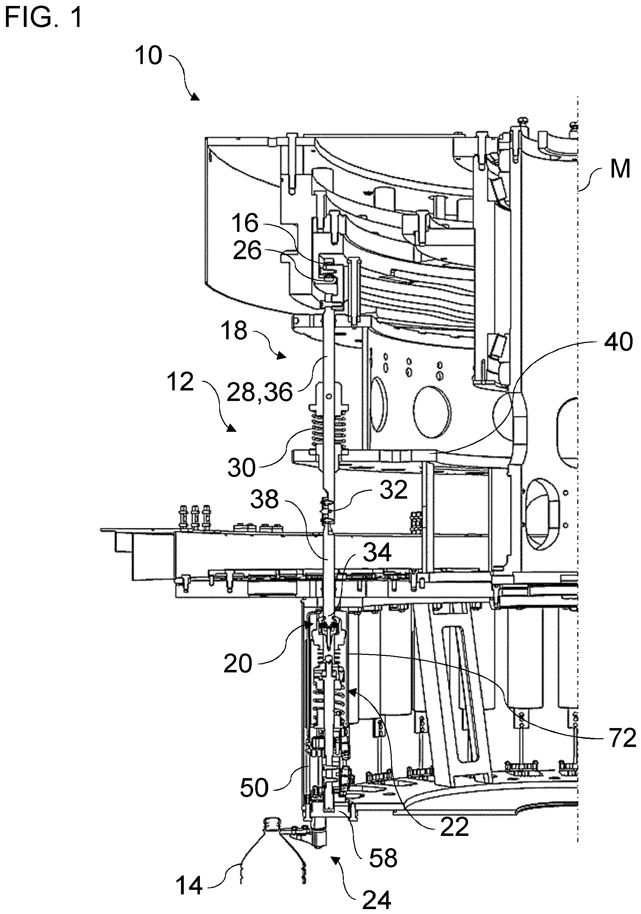

Figur 1 zeigt einen Abschnitt einer Behälterbehandlungsvorrichtung 10 mit mindestens einer Vorrichtung 12 zum Halten eines Behälters 14. Die Behälterbehandlungsvorrichtung 10 ist bevorzugt als eine Verschließvorrichtung zum Verschließen von Behältern 14 ausgeführt. Es ist jedoch auch möglich, dass die Vorrichtung 12 in jeglicher anderen Behältertransport- und/oder Behälterbehandlungsvorrichtung zum Halten eines Behälters 14 umfasst ist. Die Behältertransport- und/oder Behälterbehandlungsvorrichtung kann beispielsweise als eine Rundläufer-Vorrichtung bzw. in Karussellbauart oder als Linear-Vorrichtung ausgeführt sein. Die Behältertransport- und/oder Behälterbehandlungsvorrichtung kann bevorzugt mehrere der Vorrichtungen 12 aufweisen.

Bevorzugt sind mehrere der Vorrichtungen 12 in einer Verschließvorrichtung zum Verschließen von Behältern 14, z. B. mit einem Deckel, einem Korken, einem Kronkorken oder einem Schraubverschluss, umfasst. Die Verschließvorrichtung kann vorzugsweise als ein Verschließerkarussell ausgeführt sein. Die Verschließvorrichtung kann mehrere Verschließstationen zum gleichzeitigen Verschließen mehrerer Behälter 14 aufweisen. Jede Verschließstation kann eine Vorrichtung 12 aufweisen. Bspw. können die Verschließstationen bzw. die Vorrichtungen 12 um einen Umfang der als Verschließerkarussell ausgeführten Verschließvorrichtung angeordnet sein. Die Verschließvorrichtung kann bezüglich eines Behälterstroms stromabwärts von einer Füllvorrichtung zum Füllen der Behälter 14 mit einem bspw. flüssigen oder pastösen Füllgut angeordnet sein.

Nachfolgend ist die Vorrichtung 12 unter Bezugnahme auf die Figuren 1 bis 5 näher beschrieben.

Bevorzugt ist die Vorrichtung 12 in einer Vertikalrichtung ausgerichtet. Die Vorrichtung 12 kann eine Längsachse aufweisen, die im Wesentlichen parallel zu einer Hochachse oder Mittelachse M der Behälterbehandlungsvorrichtung 10 sein kann. Es ist jedoch bspw. auch möglich, dass die Vorrichtung 12 in einer Horizontalrichtung ausgerichtet ist (nicht in den Figuren dargestellt). Entsprechend kann eine Längsachse der Vorrichtung 12 im Wesentlichen parallel zu einer Horizontalebene ausgeführt sein.

Bevorzugt kann sich die Vorrichtung 12 mit weiteren Vorrichtungen 12 zum Halten von Behältern 14 im Betrieb der Behälterbehandlungsvorrichtung 10 um eine bevorzugt vertikale Mittelachse bzw. Drehachse M der Behälterbehandlungsvorrichtung 10 drehen und dabei beispielsweise den jeweils gehaltenen Behälter 14 transportieren (siehe Figur 1).

Die Vorrichtung 12 weist ein Führungselement 16, eine erste Übertragungseinrichtung 18, einen Verbinder 20, eine zweite Übertragungseinrichtung 22 und eine Behälterhalterung 24 auf. Bevorzugt sind die erste Übertragungseinrichtung 18, der Verbinder 20 und die zweite Übertragungseinrichtung 22 in der genannten Reihenfolge nacheinander entlang einer Achse, vorzugsweise einer Vertikalachse, angeordnet. Vorzugweise kann die erste Übertragungseinrichtung 18 oberhalb von dem Verbinder 20 und der zweiten Übertragungseinrichtung 22 angeordnet sein.

Das Führungselement 16 ist zum Folgen einer mechanischen Steuerkurve 26 der Behälterbehandlungsvorrichtung 10 ausgebildet, wie in Figur 1 dargestellt. Beispielsweise kann das Führungselement 16 an der Steuerkurve 26 abrollen oder an dieser entlanggleiten. Beispielsweise kann das Führungselement 16 als eine drehbare Rolle oder ein Gleitschuh ausgeführt sein. Vorzugsweise kann das Führungselement 16 elastisch gegen die Steuerkurve vorgespannt sein, z. B. mittels mindestens eines elastischen (z. B. Feder-) Elements.

Die Steuerkurve 26 ist bevorzugt eine umlaufende bzw. geschlossene Steuerkurve. Beispielsweise kann die Steuerkurve 26 um einen Umfang der Behälterbehandlungsvorrichtung 10 umlaufen. Bevorzugt kann die Steuerkurve 26 oberhalb von dem Verbinder 20, der zweiten Übertragungseinrichtung 22 und/oder der Behälterhalterung 24 angeordnet sein. Die Steuerkurve 26 kann in einem feststehenden Teil der bevorzugt als Rundläufer ausgeführten Vorrichtung 10 angeordnet sein.

Ein (z. B. Höhen- oder Radial-) Verlauf der Steuerkurve 26 kann eine (z. B. Höhen- oder Radial-) Position des entlang der Steuerkurve 26 geführten Führungselements 16 beeinflussen bzw. vorgeben. Das Führungselement 16 kann über die erste Übertragungseinrichtung 18, den Verbinder 20 und die zweite Übertragungseinrichtung 22 in Wirkverbindung mit der Behälterhalterung 24 sein. Entsprechend kann Behälterhalterung 24 durch einen Verlauf der Steuerkurve 26 mittels des entlang der Steuerkurve 26 geführten Führungselements 16 mechanisch betätigt werden.

Die erste Übertragungseinrichtung 18 ist vorzugsweise direkt mit dem Führungselement 16 verbunden. Die erste Übertragungseinrichtung 18 kann derart mit den Führungselementen 16 verbunden sein, dass der Verlauf der Steuerkurve 26 über das Führungselement 16 auf die erste Übertragungseinrichtung 18 übertragen wird.

Die erste Übertragungseinrichtung 18 kann beispielsweise ein Verbindungsgestänge 28, ein Vorspannelement 30, einen Verstellmechanismus 32 und/oder ein Gegenstück 34 für den Verbinder 20 aufweisen.

Das Verbindungsgestänge 28 ist bevorzugt als ein Verbindungshubgestänge ausgeführt. Beispielsweise kann das Verbindungsgestänge 28 mindestens eine Hubstange 36, 38 aufweisen. Längsachsen der Hubstangen 36, 38 sind bevorzugt vertikal ausgerichtet und können beispielsweise miteinander fluchten oder parallel verlaufen. Ein Höhenverlauf der Steuerkurve 26 kann über das Führungselement 16 einen Hub des Verbindungsgestänges 28 bewirken.

Das Vorspannelement 30 kann das Verbindungsgestänge 28 in einer Richtung, vorzugsweise Vertikalrichtung, vorspannen. Bevorzugt spannt das Vorspannelement 30 das Verbindungsgestänge 28 entgegen einer Vertikalrichtung nach unten vor. Das Vorspannelement 30 kann beispielsweise als eine Spiralfeder ausgeführt sein. Das Vorspannelement 30 kann koaxial zu dem Verbindungsgestänge 28 angeordnet sein. Das Vorspannelement 30 kann sich einerseits an dem Verbindungsgestänge 28 und andererseits an einem Träger 40 der Behälterbehandlungsvorrichtung 10 abstützen (siehe Figur 1). Das Vorspannelement 30 kann mittels mindestens eines Drehlagers, z. B. eines Wälzlagers, drehentkoppelt von dem Träger 40 und/oder dem Verbindungsgestänge 28 sein.

Der Verstellmechanismus 32 kann dazu ausgebildet sein, eine Axiallänge der ersten Übertragungseinrichtung 18 zu verstellen. Die Axiallänge kann entlang einer Längsachse der ersten Übertragungseinrichtung 18 gemessen sein. Beispielsweise kann der Verstellmechanismus 32 mehrere (zum Beispiel zwei) Stangen des Verbindungsgestänges 28 axial verstellbar miteinander verbinden. Bevorzugt kann der Verstellmechanismus 32 die Hubstange 36 und Hubstange 38 axial verstellbar miteinander verbinden. Die Hubstangen 36, 38 können axial verstellbar aneinander geführt sein. Mindestens ein lösbares und fixierbares Verstellelement des Verstellmechanismus 32 kann die Hubstangen 36, 38 in einer gewünschten Relativpositionierung zueinander zum Einstellen einer Axiallänge der ersten Übertragungseinrichtung 18 zueinander festlegen.

Es ist möglich, dass der Verstellmechanismus 32 in der zweiten Übertragungseinrichtung 22 umfasst ist oder dass die zweite Übertragungseinrichtung 22 einen zusätzlichen Verstellmechanismus zum Verstellen einer Axiallänge der zweiten Übertragungseinrichtung 22 aufweist.

Das Gegenstück 34 kann zum Ineinandergreifen mit dem Verbinder 20 ausgebildet sein. Über das Gegenstück 34 und den Verbinder 20 können die erste Übertragungseinrichtung 18 und die zweite Übertragungseinrichtung 22 miteinander verbunden werden. Beispielsweise kann das Gegenstück 34 an einem (z. B. unteren) Ende der ersten Übertragungseinrichtung 18 angeordnet sein, und der Verbinder 20 an einem (z. B. oberen) Ende der zweiten Übertragungseinrichtung 22 angeordnet sein, wie in den Figuren dargestellt ist. Es ist jedoch beispielsweise auch möglich, dass das Gegenstück 34 an einem (z. B. oberen) Ende der zweiten Übertragungseinrichtung 22 angeordnet ist, und der Verbinder 20 ist an einem (z. B. unteren) Ende der ersten Übertragungseinrichtung 18 angeordnet (nicht in den Figuren dargestellt).

Bevorzugt kann das Gegenstück 34 integral-einstückig mit der Hubstange 38 ausgebildet sein. Das Gegenstück 34 kann eine bevorzugt umlaufende Nut zum Eingreifen mit dem Verbinder 20 aufweisen. Bevorzugt ist das Gegenstück 34 zumindest abschnittsweise konusförmig oder pilzförmig. Beispielsweise kann sich das Gegenstück 34 zu seinem freien Ende hin verjüngen, vorzugsweise spitz zulaufen.

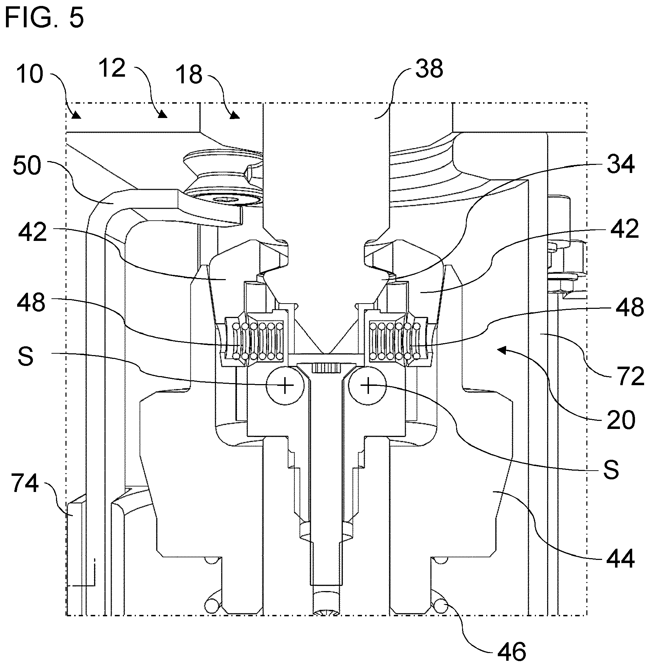

Der Verbinder 20 kann die erste Übertragungseinrichtung 18 und die zweite Übertragungseinrichtung 22 miteinander verbinden. Der Verbinder 20 ist besonders detailliert in Figur 5 dargestellt. Bevorzugt ist der Verbinder 20 als ein sogenannter Schnellverbinder bzw. Schnellverschluss ausgeführt, der bevorzugt (auch) werkzeuglos betätigbar ist (z. B. zum Entkoppeln).

Wie in den Figuren dargestellt ist, kann der Verbinder 20 bevorzugt an einem (zum Beispiel oberen) Ende der zweiten Übertragungseinrichtung 22 angeordnet sein. Es ist jedoch auch möglich, dass der Verbinder 20 beispielsweise an einem vorzugsweise unteren Ende der ersten Übertragungseinrichtung 18 angeordnet ist (nicht in den Figuren dargestellt).

Der Verbinder 20 weist mindestens ein Verbindungselement 42 auf. Das mindestens eine Verbindungselement 42 ist in eine Verbindungsstellung und in eine Freigabestellung bewegbar, vorzugsweise schwenkbar und/oder verschiebbar. Das mindestens eine Verbindungselement 42 kann bevorzugt hin zu und weg von einer Mittellängsachse, vorzugsweise Mittelhochachse, der Vorrichtung 12 bewegt, z. B. geschwenkt und/oder verschoben werden. Bevorzugt ist das mindestens eine Verbindungselement 42 zwischen der Verbindungsstellung und der Freigabestellung bewegbar. Beispielsweise kann das mindestens eine Verbindungselement 42 zum Einnehmen der Verbindungsstellung (z. B. radial) hin zu der Mittellängsachse bewegt werden. Zum Einnehmen der Freigabestellung kann das mindestens eine Verbindungselement 42 (z. B. radial) weg von der Mittellängsachse bewegt werden. Beispielsweise kann mindestens eine Verbindungselement 42 um eine Schwenkachse S schwenkbar sein, wie in Figur 5 dargestellt ist.

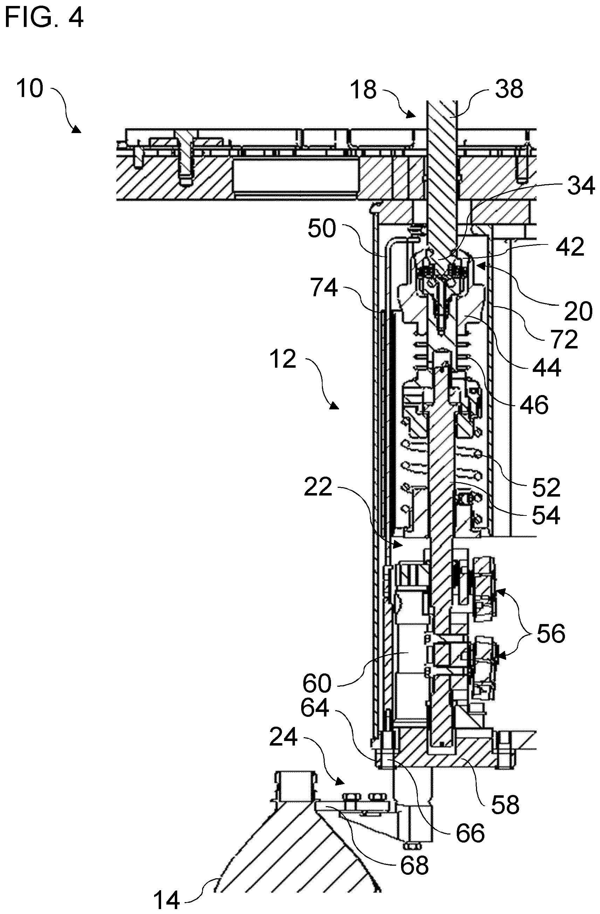

In der Verbindungsstellung verbindet der Verbinder 20 die erste Übertragungseinrichtung 18 und die zweite Übertragungseinrichtung 22 zum Herstellen einer Wirkverbindung von dem Führungselement 16 zu der Behälterhalterung 24 miteinander. In der Verbindungsstellung kann die Behälterhalterung 24 von dem Führungselement 16 betätigt, zum Beispiel geöffnet und/oder geschlossen, werden. Der Verbinder 20 und das Gegenstück 34 können in der Verbindungsstellung zum Verbinden der ersten und zweiten Übertragungseinrichtung 18, 22 ineinandergreifen. Der Verbinder 20 bzw. das mindestens eine Verbindungselement 42 ist beispielsweise in den Figuren 4 und 5 in der Verbindungsstellung dargestellt.

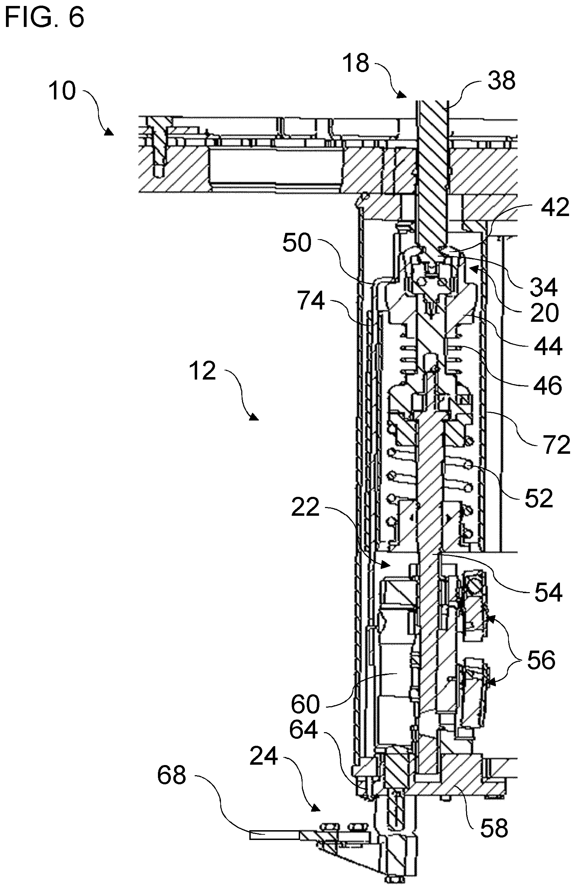

In der Freigabestellung entkoppelt der Verbinder 20 die erste Übertragungseinrichtung 18 und die zweite Übertragungseinrichtung 22 zur Demontage voneinander. Der Verbinder 20 und das Gegenstück 34 können in der Freigabestellung zum Entkoppeln bzw. Trennen der ersten und zweiten Übertragungseinrichtung 18, 22 voneinander entkoppelt bzw. getrennt sein. Der Verbinder 20 bzw. das mindestens eine Verbindungselement 42 ist beispielsweise in der Figur 6 in der Freigabestellung dargestellt.

Der Verbinder 20 ist bevorzugt als ein Formschlussverbinder ausgeführt. Der Verbinder 20 kann beispielsweise als ein Rastverbinder, ein Klauenverbinder oder ein Schnappverbinder ausgeführt sein. Entsprechend kann das mindestens eine Verbindungselement 42 als ein Rastelement, ein Klauenelement oder ein Schnappelement ausgeführt sein. Der Verbinder 20 bzw. das mindestens eine Verbindungselement 42 kann bevorzugt in eine vorzugsweise umlaufende Nut des Gegenstücks 34 eingreifen. Besonders vorteilhaft kann durch die umlaufende Nut des Gegenstücks 34 und das damit verbindbare mindestens eine Verbindungselement 42 erreicht werden, dass die Befestigung an jeder Stelle der Nut stattfinden kann. Dadurch müssen keine Stellungsgenauigkeiten zwischen Nut und Verbindungselement 42 vorhanden sein, und es können von der Ansteuerung bis zur Prozesseinheit keine Verspannungen entstehen, die zum Verschleiß der Vorrichtung 12 usw. führen würden.

Bevorzugt können mehrere Verbindungselemente 42 umfasst sein. Die Verbindungselemente 42 können um einen Umfang des Verbinders 20 herum verteilt angeordnet sein, vorzugsweise gleichmäßig bzw. äquidistant. Das Gegenstück 34 kann in der Verbindungsstellung radial innen von den Verbindungselementen 42 zum Ineinandergreifen mit den Verbindungselementen 42 positioniert sein.

Das mindestens eine Verbindungselement 42 kann zum Einnehmen der Verbindungsstellung elastisch vorgespannt sein.

Beispielsweise kann der Verbinder 20 eine Hülse 44 und ein elastisches Element 46 aufweisen. Die Hülse 44 kann axial bezüglich des Verbinders 20 bzw. dessen Mittellängsachse bewegbar sein. Die Hülse 44 kann bevorzugt koaxial zu der Mittellängsachse des Verbinders 20 angeordnet sein. Die Hülse 44 kann das mindestens eine Verbindungselement 42 umgeben. Die Hülse 44 kann auf das mindestens eine Verbindungselement 42 aufschiebbar sein. Die Hülse 44 kann von dem elastischen Element 46 axial vorgespannt sein, z. B. zum Bewegen nach oben. Das elastische Element 46 kann beispielsweise eine Schraubenfeder sein. Das elastische Element 46 kann bevorzugt koaxial zu der Mittellängsachse des Verbinders 20 angeordnet sein. Das elastische Element 46 kann sich bspw. an einem Trägerteil der zweiten Übertragungseinrichtung 22 abstützen, z. B. unter Zwischenschaltung eines weiteren elastischen Elements 52. Das weitere elastische Element 52 kann beispielsweise als eine Schraubenfeder ausgeführt sein.

Bei einer durch die elastische Vorspannung bewirkten Axialbewegung der Hülse 44 nach oben, kann die Hülse 44 das mindestens eine Verbindungselement 42 radial nach innen drücken. Je nach Lagerung kann das mindestens eine Verbindungselement 42 bspw. radial nach innen geschoben oder geschwenkt werden, bis es mit dem Gegenstück 34 eingreift bzw. die Verbindungsstellung einnimmt. Die Hülse 44 kann das mindestens eine Verbindungselement 42 in dieser Stellung durch die axiale Vorspannung mittels des elastischen Elements 46 sichern. Vorzugsweise kann der Verbinder 20 somit selbstsichernd zum Halten des mindestens einen Verbindungselements 42 in der Verbindungsstellung sein.

Zum Lösen des Verbinders 20 bzw. zum Verlassen der Verbindungsstellung kann die Hülse 44 entgegen der elastischen Vorspannung durch das elastische Element 46 axial bewegt werden, z. B. nach unten. Gibt die Hülse 44 dann das mindestens eine Verbindungselement 42 frei, so kann sich dieses bspw. unter Wirkung mindestens eines weiteren elastischen Elements 48 nach außen bewegen. Das mindestens eine Verbindungelement 42 bewegt sich bevorzugt radial nach außen. Das mindestens eine Verbindungselement 42 kann beispielsweise nach außen schwenken (z. B. um die Schwenkachse S) oder sich nach außen verschieben. Das mindestens eine weitere elastische Element 48 kann bezüglich der Mittellängsachse des Verbinders 20 radial innen von dem mindestens einen Verbindungselement 42 angeordnet sein. Beispielsweise kann jedem Verbindungselement 42 ein weiteres elastisches Element 48 zugeordnet sein.

Zum Lösen des Verbinders 20 kann bevorzugt ein Löseelement 50 umfasst sein. Das Löseelement 50 kann axial bewegbar sein. Das Löseelement 50 ist bevorzugt als eine manuell betätigbare Zugstange ausgeführt. Das Löseelement 50 kann bevorzugt über die Hülse 44 mit dem Verbinder 20 verbunden werden, um das mindestens eine Verbindungselement 42 in die Freigabestellung zu bewegen. Mittels des Löseelements 50 kann die Hülse 44 entgegen ihrer elastischen Vorspannung bewegt werden, z. B. nach unten. Das Löseelement 50 kann sich hierfür beispielsweise mit einem angewinkelten oberen Ende an einem Außenabsatz der Hülse 44 abstützen.

Die zweite Übertragungseinrichtung 22 ist vorzugsweise direkt mit der Behälterhalterung 24 verbunden. Die zweite Übertragungseinrichtung 22 kann derart mit der Behälterhalterung 24 verbunden sein, dass eine über den Verbinder 20 empfangene Betätigungsbewegung von der zweiten Übertragungseinrichtung 22 zum Betätigen der Behälterhalterung 24 zu der Behälterhalterung 24 übertragbar ist.

Bevorzugt weist die zweite Übertragungseinrichtung 22 eine Hubstange 54, ein Getriebe 56 und/oder ein Montageelement 58 auf.

Die Hubstange 54 kann in Wirkverbindung zwischen dem Verbinder 20 und dem Getriebe 56 angeordnet sein. Das Getriebe 56 kann in Wirkverbindung zwischen der Hubstange 54 und der Behälterhalterung 24 angeordnet sein. Eine Vertikalbewegung der Hubstange 54 kann von dem Getriebe 56 beispielsweise in eine Drehbewegung mindestens einer Welle 60, 62 des Getriebes 56 umgeformt werden. Die mindestens eine Welle 60, 62 kann eine Schließ- und/oder Öffnungsbewegung der Behälterhalterung 24 antreiben.

Das Montageelement 58 ist bevorzugt plattenförmig. Vorzugsweise kann das Montageelement 58 als eine Montageplatte ausgeführt sein. Das Montageelement 58 kann die zweite Übertragungseinrichtung 22 und/oder die Behälterhalterung 24 tragen. Das Montageelement 58 kann die zweite Übertragungseinrichtung 22 an einem Träger der Behälterbehandlungsvorrichtung 10 anbringen (siehe Figur 1). Der Träger kann sich bevorzugt im Betrieb der Behälterbehandlungsvorrichtung 10 um die Mittelachse M drehen. Bevorzugt kann das Montageelement 58 von unten an dem Träger montiert sein. Das Montageelement 58 kann beispielsweise mittels einer Überkopf-Montage an dem Träger montiert werden.

Bevorzugt kann das Montageelement 58 einen sogenannten Grauraum von einem Reinraum trennen. Der Reinraum ist auf einer Seite des Montageelements 58 angeordnet. Der Grauraum ist auf einer entgegengesetzten Seite des Montageelements 58 angeordnet. Bevorzugt ist der Reinraum unterhalb von dem Montageelement 58 und der Grauraum oberhalb von dem Montageelement 58 angeordnet. Im Reinraum kann der Behälter 14 getragen sein. Entsprechend kann die Behälterhalterung 24 und zumindest ein Teil der zweiten Übertragungseinrichtung 22 in dem Reinraum angeordnet sein. Andererseits können die Steuerkurve 26, das Führungselement 16, die erste Übertragungseinrichtung 18, der Verbinder 20 und/oder zumindest ein (anderer) Teil der zweiten Übertragungseinrichtung 22 in dem Grauraum angeordnet sein. Bevorzugt ist zwischen dem Montageelement 58 und der zweiten Übertragungseinrichtung 22 abgedichtet, z. B. im Bereich der mindestens einen Welle 60, 62.

Das Montageelement 58 kann mindestens eine Wellendurchführung für die mindestens eine Welle 60, 62 aufweisen. Bevorzugt weist das Montageelement 58 je Welle 60, 62 eine Wellendurchführung auf. Die mindestens eine Welle 60, 62 kann sich durch die mindestens eine Wellendurchführung erstrecken, vorzugsweise von einer Oberseite des Montageelements 58 zu einer Unterseite des Montageelements 58.

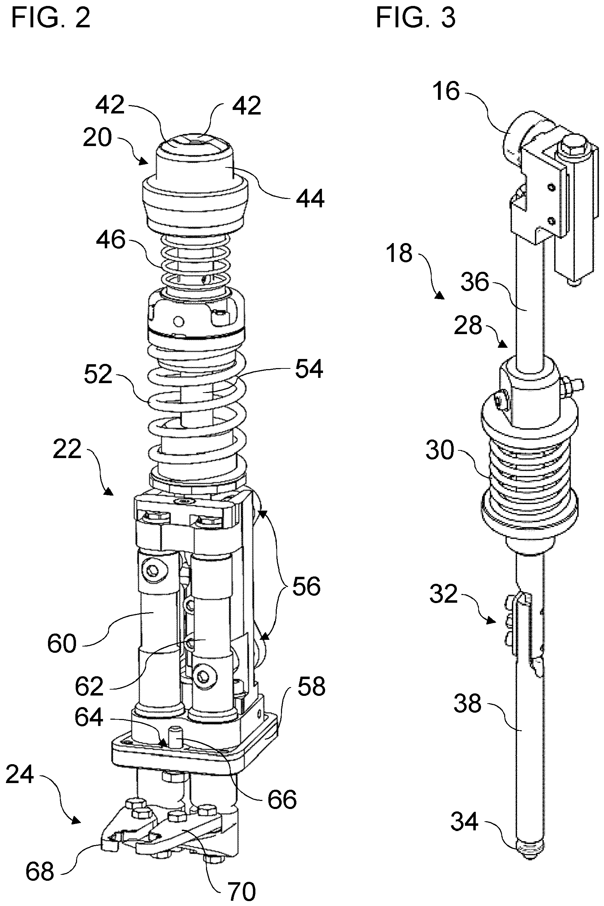

Bevorzugt weiset das Montageelement 58 ein Durchgangsloch 64 auf, wie beispielsweise in den Figuren 2 und 4 dargestellt ist. Das Durchgangsloch 64 kann sich beispielsweise von einer Unterseite des Montageelements 58 zu einer Oberseite des Montageelements 58 erstrecken. Das Durchgangsloch 64 kann mit dem Löseelement 50 fluchten. Das Löseelement 50 kann durch das Durchgangsloch 64 zugängig sein, wenn das Durchgangsloch 64 frei bzw. nicht abgedeckt ist.

Das Durchgangsloch 64 kann mit einem Verschlusselement 66 abdeckbar oder verschließbar sein. Bevorzugt ist das Verschlusselement 66 ein Befestigungselement, vorzugsweise eine Befestigungsschraube. Das Befestigungselement kann sich durch das Durchgangsloch 64 erstrecken. Das Befestigungselement kann das Montageelement 58 an einem Träger der Behälterbehandlungsvorrichtung 10 befestigen.

Bevorzugt kann das Verschlusselement 66 im Einbauzustand im Durchgangsloch 64 das Löseelement 50 axial sichern. Vorzugsweise kann beim Lösen des Verschlusselements 66 von dem Durchgangsloch 64 das Löseelement 50 schwerkraftbedingt mit einem unteren Abschnitt des Löseelements 50 durch das Durchgangsloch 64 rutschen oder gleiten, z. B. bis ein oberer Abschnitt oder ein oberes Ende des Löseelements 50 den Verbinder 20, vorzugsweise dessen Hülse 44, kontaktiert.

Die Behälterhalterung 24 kann ausgehend von der Steuerkurve 26 über das Führungselement 16, die erste Übertragungseinrichtung 18, den Verbinder 20 und die zweite Übertragungseinrichtung 22 betätigt werden. Beispielsweise kann die Behälterhalterung 24 zum Öffnen zum Freigeben eines gehaltenen Behälters 14 betätigt werden. Alternativ oder zusätzlich kann die Behälterhalterung 24 zum Schließen zum Halten eines Behälters 14 betätigt werden.

Die Behälterhalterung 24 kann auf jegliche Weise zum Halten des Behälters 14 ausgeführt sein. Bevorzugt ist die Behälterhalterung 24 als eine Neckhandling-Behälterhalterung ausgeführt. Beispielsweise kann die Behälterhalterung 24 den Behälter 14 an dessen Behälterhals unterhalb oder oberhalb von dessen Halsring tragen.

Besonders bevorzugt ist die Behälterhalterung 24 als eine Klammereinrichtung bzw. eine Greifeinrichtung ausgeführt. Die Klammereinrichtung weist bevorzugt mindestens einen bewegbaren Klammerarm 68, 70 auf. Der mindestens eine Klammerarm 68, 70 kann einteilig oder mehrteilig sein. Der mindestens eine Klammerarm 68, 70 kann in einer Horizontalebene ausgerichtet sein. Bevorzugt sind zwei Klammerarme 68, 70 umfasst, die den Behälter 14 zwischen sich halten können. Vorzugsweise sind die zwei Klammerarme 68, 70 gegensinnig zueinander bewegbar, z. B. schwenkbar (wie im in den Figuren dargestellten Ausführungsbeispiel) oder verschiebbar.

Bevorzugt ist der mindestens eine Klammerarm 68, 70 mit der mindestens einen Welle 60, 62 zum Verschwenken des mindestens einen Klammerarms 68, 70 verbunden, z. B. an einem unteren Ende der mindestens einen Welle 60, 62. Beispielsweise kann der Klammerarm 68 mit der Welle 60 zum Hin- und Herschwenken des Klammerarms 68 mittels der Welle 60 verbunden sein. Eine Längsachse der Welle 60 kann eine bevorzugt vertikal ausgerichtete Schwenkachse des Klammerarms 68 sein. Zusätzlich kann der Klammerarm 70 mit der Welle 62 zum Hin- und Herschwenken des Klammerarms 70 mittels der Welle 62 verbunden sein. Eine Längsachse der Welle 62 kann eine bevorzugt vertikal ausgerichtete Schwenkachse des Klammerarms 70 sein. Es ist jedoch auch möglich, dass der mindestens eine Klammerarm 68, 70 von der zweiten Übertragungseinrichtung 22 zum Halten und/oder Freigeben des Behälters 14 translatorisch verschiebbar ist (nicht in den Figuren dargestellt).

Optional kann die Vorrichtung 12 beispielsweise noch ein Positionierelement 72 aufweisen.

Das Positionierelement 72 kann nach unten hin offen sein. Das Positionierelement 27 kann rohrförmig oder kanalförmig sein. Eine Längsachse des Positionierelements 72 kann bevorzugt vertikal ausgerichtet sein. Das Positionierelement 72 kann an seinem oberen Ende an einem Träger der Behälterbehandlungsvorrichtung 10 angebracht sein. Im Einbauzustand kann das Positionierelement 72 die zweite Übertragungseinrichtung 22 und den Verbinder 20 umgeben, vorzugsweise koaxial. Das Positionierelement 72 kann koaxial zu dem Gegenstück 34 und/oder der ersten Übertragungseinrichtung 18 angeordnet sein.

Mittels des Positionierelements 72 kann eine Montage der Vorrichtung 12 an der Behälterbehandlungsvorrichtung 10 erleichtert werden. Das Positionierelement 72 ist dazu ausgebildet, den Verbinder 20 und das Gegenstück 34 bei der Montage relativ zueinander zu positionieren, sodass vorzugsweise das mindestens eine Verbindungselement 42 und das Gegenstück 34 ineinandergreifen können.

Im dargestellten Ausführungsbeispiel kann der Verbinder 20 von dem Positionierelement 72 zu dem Gegenstück 34 geführt werden, vorzugsweise durch Einführen des Verbinders 20 in das Positionierelement 72 hinein. Bevorzugt sind dabei die zweite Übertragungseinrichtung 22 und die Behälterhalterung 24 bereits mit dem Verbinder 20 verbunden.

In einem alternativen, nicht in den Figuren dargestellten Ausführungsbeispiel kann der Verbinder 20 an einem bevorzugt unteren Ende der ersten Übertragungseinrichtung 18 montiert sein, und das Gegenstück 34 kann an einem oberen Ende der zweiten Übertragungseinrichtung 22 angeordnet sein. In diesem Ausführungsbeispiel kann das Gegenstück 34 von dem Positionierelement 72 zu dem Verbinder 20 geführt werden, vorzugsweise durch Einführen des Gegenstücks 34 in das Positionierelement 72 hinein. Bevorzugt sind dabei die zweite Übertragungsvorrichtung 22 und die Behälterhalterung 24 bereits mit dem Gegenstück 34 verbunden.

Besonders bevorzugt kann das Löseelement 50 in oder an einer Wand 74 des Positionierelements 72 geführt sein, vorzugsweise axial. Die Wand 74 kann bevorzugt eine Rohrwand des Positionierelements 72 sein. Beispielsweise kann das Positionierelement 72 ein Durchgangsloch in der Wand 74 aufweisen. Das Löseelement 50 kann sich durch das Durchgangsloch in der Wand 74 des Positionierelements 72 erstrecken. Bevorzugt kann das Durchgangsloch in der Wand 74 mit dem Durchgangsloch 64 des Montageelements 58 fluchten.

Der hierin offenbarte Aufbau der Vorrichtung 12 ermöglicht insbesondere eine verbesserte Montage und Demontage, wie nachfolgend anhand der Figuren 4 bis 9 beispielhaft beschrieben ist.

Die Figuren 4 und 5 zeigen den Einbauzustand, der bereits obenstehend ausführlich erläutert wurde. Eine Baugruppe aus dem Verbinder 20, der zweiten Übertragungseinrichtung 22 und der Behälterhalterung 24 kann durch Entkoppeln des Verbinders 20 von dem Gegenstück 34 als Ganzes demontiert werden. Beispielhaft ist dies nachfolgend erläutert.

In Figur 6 ist dargestellt, dass das Verschlusselement 66 von dem Durchgangsloch 64 entfernt wurde. Dadurch kann ein (z. B. unteres) Ende des Löseelements 50 durch das Durchgangsloch 64 zugängig sein. Da das Verschlusselement 66 das Löseelement 50 nicht mehr axial sichert, kann sich das Löseelement 50 axial, z. B. geführt in der Wand 74, schwerkraftbedingt nach unten bewegen. Das Löseelement 50 kann sich bewegen, bis es in Kontakt mit dem Verbinder 20, z. B. dem Außenabsatz an der Hülse 44 kommt. Ein unterer Abschnitt bzw. ein unteres Ende des Löseelements 50 kann durch das Durchgangsloch 64 treten oder zumindest einfach durch das Durchgangsloch 64 zugängig sein.

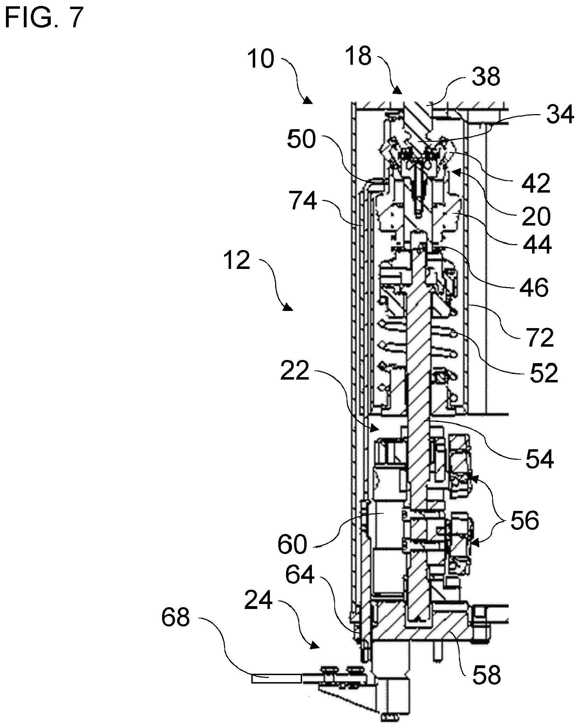

In Figur 7 ist dargestellt, dass das Löseelement 50 zum Entkoppeln des Verbinders 20 axial bewegt wird, z. B. beispielhaft nach unten. Dabei kann die Hülse 44 des Verbinders 20 entgegen der Vorspannrichtung mitbewegt werden. Das mindestens eine Verbindungselement 42 kann in die Freigabestellung bewegt werden. Eine Verbindung zwischen dem Gegenstück 34 und dem Verbinder 20 wird getrennt.

Die Axialbewegung des Löseelements 50 kann bspw. durch manuelles Ziehen am unteren Ende des Löseelements 50 bewirkt werden. Alternativ kann bspw. ein Werkzeug (nicht in den Figuren dargestellt) an dem unteren Ende des Löseelements 50 befestigt, z. B. verschraubt, werden, um das Löseelement 50 mit dem Werkzeug axial zu bewegen. Es ist möglich, dass das Werkzeug durch das Durchgangsloch 64 eingeführt wird.

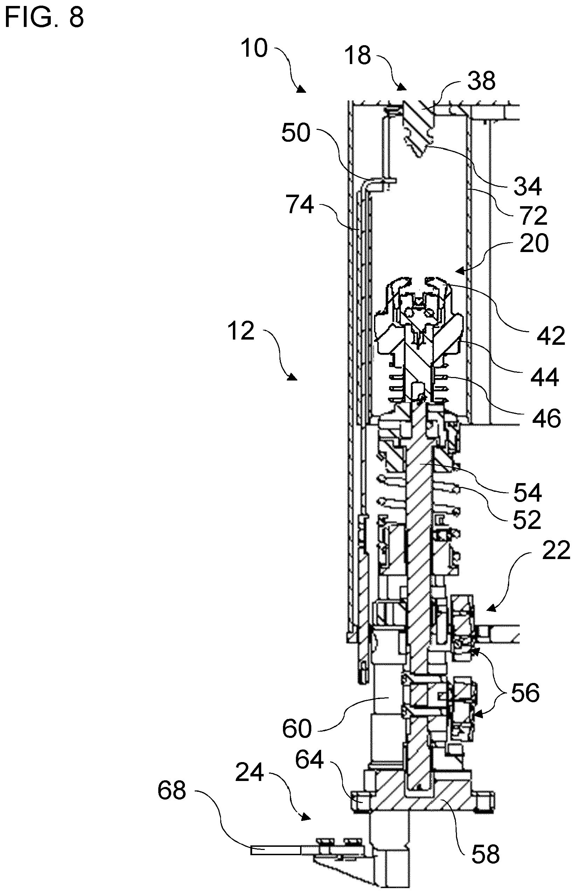

In Figur 8 ist dargestellt, dass nach erfolgtem Lösen des Montagelements 58 vom Träger der Behälterbehandlungsvorrichtung 10 nunmehr die Baugruppe aus dem Verbinder 20, der zweiten Übertragungseinrichtung 22 und der Behälterhalterung als Ganzes aus einem umhüllten oder gekapselten Aufnahmeraum der Behälterbehandlungsvorrichtung 10 entnommen werden kann, z. B. nach unten hin.

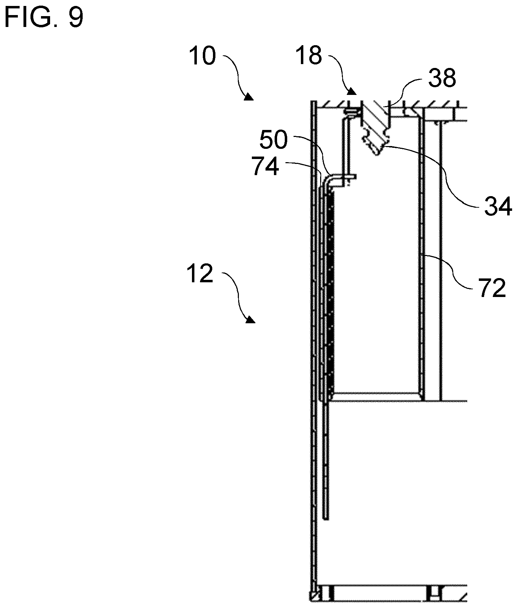

In Figur 9 ist dargestellt, dass die gesamte Baugruppe aus dem Verbinder 20, der zweiten Übertragungseinrichtung 22 und der Behälterhalterung 24 als Ganzes demontiert wurde. Das Löseelement 50 und das Positionierelement 72 können zurückbleiben.

Eine Montage der Baugruppe aus dem Verbinder 20, der zweiten Übertragungseinrichtung 22 und der Behälterhalterung 24 als Ganzes an dem Gegenstück 34 kann entsprechend in umgekehrter Reihenfolge (also Figur 9 =>.... => Figuren 4 und 5) erfolgen. Hierbei kann eine relative Positionierung zwischen dem Verbinder 20 und dem Gegenstück 34 mittels des Positionierelements 72 erheblich vereinfacht werden. Beispielsweise kann der Verbinder 20 in das Positionierelement 72 eingeführt und von dem Positionierelement 72 zu dem Gegenstück 34 geführt werden. Zudem kann auf eine Betätigung mittels des Löseelements 50 verzichtet werden, da das mindestens eine Verbindungselement 42 zum Einnehmen der Verbindungsstellung elastisch vorgespannt sein kann.

Alternativ oder zusätzlich kann vor der Montage der Baugruppe noch eine Einstellung des sich drehenden Teils der Vorrichtung 10, sofern vorhanden, erfolgen. Hierbei kann bspw. ein Rundlauf, ein Planlauf und/oder eine Neigung des drehenden Teils verstellt werden.

Alternativ oder zusätzlich kann vor der Montage der Baugruppe das Führungselement 16 und die erste Übertragungseinrichtung 18 in der Vorrichtung 10 montiert werden. Beispielsweise kann das Führungselement 16 geführt an der Steuerkurve 26 positioniert werden.

Alternativ oder zusätzlich kann vor der Montage der Baugruppe eine Axiallänge der ersten Übertragungseinrichtung 18 mittels des Verstellmechanismus 32 auf ein gewünschtes Maß feineingestellt werden. Hierzu kann bspw. eine Einstellhilfe (nicht in den Figuren dargestellt) mit einer vorbestimmten Axiallänge an den Träger, an den das Montageelement 58 zu montieren ist, montiert werden. Der Verstellmechanismus 32 kann nunmehr auf ein durch die Einstellhilfe vorgegebenes Axialmaß eingestellt werden, z. B. bis das Gegenstück 34 die Einstellhilfe berührt o. Ä..

Alternativ oder zusätzlich kann nach der Montage der Baugruppe bspw. noch ein Verschließerkopf zum Verschließen eines von der Vorrichtung 12 gehaltenen Behälters 14 montiert werden (nicht in den Figuren dargestellt).

Wie bereits erwähnt, ist es möglich, dass der Verbinder 20 und das Gegenstück 34 vertauscht angeordnet sind (nicht in den Figuren dargestellt). In einem solchen Ausführungsbeispiel kann entsprechend eine Baugruppe aus dem Gegenstück 34, der zweiten Übertragungseinrichtung 22 und der Behälterhalterung 24 als Ganzes von dem Verbinder 20 demontiert oder als Ganzes an den Verbinder 20 montiert werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Führungselements, der ersten Übertragungseinrichtung, der zweiten Übertragungseinrichtung, des Verbinders und/oder der Behälterhalterung des unabhängigen Anspruchs 1 offenbart.

**Bezugszeichenliste**

| | | | |
|---|---|---|---|
| M | Mittelachse | 40 | Träger |
| S | Schwenkachse | 42 | Verbindungselement |
| 10 | Behälterbehandlungsvorrichtung | 44 | Hülse |
| 12 | Vorrichtung zum Halten eines Behäl- ters | 46 | elastisches Element |
| | | 48 | elastisches Element |
| 14 | Behälter | 50 | Löseelement |
| 16 | Führungselement | 52 | elastisches Element |
| 18 | erste Übertragungseinrichtung | 54 | Hubstange |
| 20 | Verbinder | 56 | Getriebe |
| 22 | zweite Übertragungseinrichtung | 58 | Montageelement |
| 24 | Behälterhalterung | 60 | Welle |
| 26 | Steuerkurve | 62 | Welle |
| 28 | Verbindungsgestänge | 64 | Durchgangsloch |
| 30 | Vorspannelement | 66 | Verschlusselement |
| 32 | Verstellmechanismus | 68 | Klammerarm |
| 34 | Gegenstück | 70 | Klammerarm |
| 36 | Hubstange | 72 | Positionierelement |
| 38 | Hubstange | 74 | Wand |

## Patentansprüche

1. Vorrichtung (12) zum Halten eines Behälters (14) für eine Behältertransport- und/oder Behälterbehandlungsvorrichtung (10), aufweisend:
ein Führungselement (16) zum Folgen einer Steuerkurve (26) der Behältertransport- und/oder der Behälterbehandlungsvorrichtung (10);
eine Behälterhalterung (24), vorzugsweise Neckhandling-Behälterhalterung, zum Halten des Behälters (14);
eine erste Übertragungseinrichtung (18), die mit dem Führungselement (16) verbunden ist,
eine zweite Übertragungseinrichtung (22), die mit der Behälterhalterung (24) verbunden ist,
einen Verbinder (20) zum Verbinden der ersten Übertragungseinrichtung (18) und der zweiten Übertragungseinrichtung (22),
wobei der Verbinder (20) mindestens ein Verbindungselement (42) aufweist, das:
- in eine Verbindungsstellung bewegbar ist, in der der Verbinder (20) die erste Übertragungseinrichtung (18) und die zweite Übertragungseinrichtung (22) zum Herstellen einer Wirkverbindung von dem Führungselement (16) zu der Behälterhalterung (24) miteinander verbindet; und
- in eine Freigabestellung bewegbar ist, in der der Verbinder (20) die erste Übertragungseinrichtung (18) und die zweite Übertragungseinrichtung (22) zur Demontage voneinander entkoppelt.

2. Vorrichtung (12) nach Anspruch 1, wobei:
das mindestens eine Verbindungselement (42) zum Einnehmen der Verbindungsstellung elastisch vorgespannt ist; und/oder
der Verbinder (20) selbstsichernd zum Halten des mindestens einen Verbindungselements (42) in der Verbindungsstellung ist.

3. Vorrichtung (12) nach Anspruch 1 oder Anspruch 2, wobei:
der Verbinder (20) als ein Formschlussverbinder, ein Rastverbinder, ein Klauenverbinder oder ein Schnappverbinder ausgeführt ist; und/oder
das mindestens eine Verbindungselement (42) als ein Rastelement, ein Schnappelement oder ein Klauenelement ausgeführt ist; und/oder
der Verbinder (20) als ein, vorzugsweise werkzeuglos betätigbarer, Schnellverbinder ausgeführt ist.

4. Vorrichtung (12) nach einem der vorherigen Ansprüche, wobei:
eine von der ersten Übertragungseinrichtung (18) und der zweiten Übertragungseinrichtung (22) ein Gegenstück (34) zum Ineinandergreifen mit dem mindestens einen Verbindungselement (42) in der Verbindungsstellung des mindestens einen Verbindungselements (42) aufweist; und optional
der Verbinder (20) an einem Ende der anderen von der der ersten Übertragungseinrichtung (18) und der zweiten Übertragungseinrichtung (22) angeordnet ist.

5. Vorrichtung (12) nach Anspruch 4, wobei mindestens eines der nachfolgenden Merkmale erfüllt ist:
das Gegenstück (34) weist eine, vorzugsweise umlaufende, Nut zum Eingreifen für das mindestens eine Verbindungselement (42) auf;
das Gegenstück (34) ist an einem Ende der ersten Übertragungseinrichtung (18) oder an einem Ende der zweiten Übertragungseinrichtung (22) angeordnet;
das Gegenstück (34) ist zumindest abschnittsweise konusförmig oder pilzförmig; und
das Gegenstück (34) verjüngt sich zu seinem freien Ende hin, vorzugsweise spitz zulaufend.

6. Vorrichtung (12) nach Anspruch 4 oder Anspruch 5, wobei:
das mindestens eine Verbindungselement (42) mehrere Verbindungselemente (42) aufweist, die, vorzugsweise gleichmäßig, um einen Umfang des Verbinders (20) herum verteilt angeordnet sind; und
das Gegenstück (34) radial innen von den mehreren Verbindungselementen (42) zum Ineinandergreifen mit den mehreren Verbindungselementen (42) positionierbar ist.

7. Vorrichtung (12) nach einem der vorherigen Ansprüche, ferner aufweisend:
ein Löseelement (50), vorzugsweise eine manuell betätigbare Zugstange, wobei das Löseelement (50) mit dem Verbinder (20) zum Bewegen des mindestens einen Verbindungselements (42) in die Freigabestellung verbindbar ist.

8. Vorrichtung (12) nach einem der vorherigen Ansprüche, ferner aufweisend:
ein Montageelement (58), vorzugsweise eine Montageplatte, zum Montieren an einem Träger der Behältertransport- und/oder Behälterbehandlungsvorrichtung (10), wobei:
das Montageelement (58) die zweite Übertragungseinrichtung (22) und/oder die Behälterhalterung (24) trägt, und
das Montageelement (58) ein Durchgangsloch (64) aufweist, durch das das Löseelement (50) zugängig ist, wobei vorzugsweise eine Längsachse des Löseelements (50) mit dem Durchgangsloch (64) fluchtet.

9. Vorrichtung (12) nach Anspruch 8, ferner aufweisend:
ein Verschlusselement (66), mit dem das Durchgangsloch (64) abdeckbar oder verschließbar ist,
wobei vorzugsweise mindestens eines der nachfolgenden Merkmale erfüllt ist:
das Löseelement (50) ist durch das Durchgangsloch (64) zugängig, wenn das Durchgangsloch (64) frei von dem Verschlusselement (66) ist;
das Verschlusselement (66) ist ein Befestigungselement, vorzugsweise eine Befestigungsschraube, mit dem das Montageelement (58) an dem Träger befestigbar ist; und
das Verschlusselement (66) sichert im Einbauzustand das Löseelement (50) axial, sodass bevorzugt beim Entfernen des Verschlusselements (66) von dem Durchgangsloch das Löseelement (50) schwerkraftbedingt mit einem unteren Abschnitt sich hin zu, in oder durch das Durchgangsloch (64) hindurch bewegt.

10. Vorrichtung (12) nach einem der vorherigen Ansprüche, wobei mindestens eines der nachfolgenden Merkmale erfüllt ist:
die erste Übertragungseinrichtung (18) weist ein Verbindungsgestänge (28), vorzugweise ein Verbindungshubgestänge, auf;
die zweite Übertragungseinrichtung (22) weist eine Hubstange (54) und ein Getriebe (56) zum Wandeln einer Axialbewegung der Hubstange (54) zu einer Schwenkbewegung der Behälterhalterung (24) auf;
die erste Übertragungseinrichtung (18), der Verbinder (20) und die zweite Übertragungseinrichtung (22) sind nacheinander entlang einer Achse, vorzugsweise einer Vertikalachse, angeordnet, vorzugweise mit der ersten Übertragungseinrichtung (18) oberhalb von dem Verbinder (20) und der zweiten Übertragungseinrichtung (22); und
die Behälterhalterung (24) weist zwei gegensinnig zueinander bewegbare, vorzugsweise verschwenkbare und/oder verschiebbare, Klammerarme (68, 70) zum Halten des Behälters (14) auf.

11. Vorrichtung (12) nach einem der vorherigen Ansprüche, wobei:
mindestens eine von der ersten Übertragungseinrichtung (18) und der zweiten Übertragungseinrichtung (22) einen Verstellmechanismus (32) zum Verstellen einer Axiallänge der mindestens einen von der ersten Übertragungseinrichtung (18) und der zweiten Übertragungseinrichtung (22) aufweist.

12. Vorrichtung (12) nach einem der vorherigen Ansprüche, ferner aufweisend:
ein, vorzugsweise nach unten offenes, Positionierelement (72) zum relativen Positionieren des Verbinders (20) und eines Gegenstücks (34) für den Verbinder (20) zueinander bei einer Montage der Vorrichtung (12),
wobei vorzugsweise mindestens eines der nachfolgenden Merkmale erfüllt ist:
das Positionierelement (72) ist rohrförmig oder kanalförmig;
das Positionierelement (72) umgibt den Verbinder (20) und/oder die zweite Übertragungseinrichtung (22);
der Verbinder (20), das Gegenstück (34) und/oder die zweite Übertragungseinrichtung (22) ist bei der Montage in das Positionierelement (72) einführbar;
das Positionierelement (72) ist koaxial zu dem Gegenstück (34), dem Verbinder (20) und/oder der ersten Übertragungseinrichtung (18) angeordnet; und
ein Löseelement (50) zum Entkoppeln des Verbinders (20) ist in oder an einer Wand (74) des Positionierelements (72) geführt.

13. Vorrichtung (12) nach einem der vorherigen Ansprüche, wobei:
die zweite Übertragungseinrichtung (22) und die Behälterhalterung (24) zusammen als eine Baugruppe mittels des Verbinders (20) an die erste Übertragungseinrichtung (18) montierbar und von der ersten Übertragungseinrichtung (18) demontierbar sind, vorzugsweise zusammen mit dem Verbinder (20) oder einem Gegenstück (34) für den Verbinder (20).

14. Behältertransport- und/oder Behälterbehandlungsvorrichtung (10), vorzugsweise Verschließvorrichtung zum Verschließen von Behältern (14), aufweisend:
eine, vorzugsweise umlaufende, Steuerkurve (26); und
mindestens eine Vorrichtung (12) zum Halten eines Behälters (14) nach einem der vorherigen Ansprüche, wobei das Führungselement (16) der mindestens einen Vorrichtung (12) entlang der Steuerkurve (26) geführt ist, vorzugsweise elastisch gegen die Steuerkurve (26) vorgespannt.

15. Verfahren zum Montieren oder Demontieren einer Vorrichtung (12) nach einem der Ansprüche 1 bis 13, aufweisend:
Montieren einer Baugruppe aus dem Verbinder (20), der zweiten Übertragungseinrichtung (22) und der Behälterhalterung (24) als Ganzes an ein Gegenstück (34) der ersten Übertragungseinrichtung (18), die bereits in einer Behältertransport- und/oder Behälterbehandlungsvorrichtung (10) montiert ist, mittels Verbinden des Verbinders (20) mit dem Gegenstück (34); oder
Montieren einer Baugruppe aus einem Gegenstück (34) für den Verbinder (20), der zweiten Übertragungseinrichtung (22) und der Behälterhalterung (24) als Ganzes an den Verbinder (20), der bereits in einer Behältertransport- und/oder Behälterbehandlungsvorrichtung (10) montiert ist, mittels Verbinden des Verbinders (20) mit dem Gegenstück (34); oder
Demontieren einer Baugruppe aus dem Verbinder (20), der zweiten Übertragungseinrichtung (22) und der Behälterhalterung (24) als Ganzes von einem Gegenstück (34) der ersten Übertragungseinrichtung (18), die noch in einer Behältertransport- und/oder Behälterbehandlungsvorrichtung (10) montiert ist, mittels Entkoppeln des Verbinders (20) von dem Gegenstück (34); oder
Demontieren einer Baugruppe aus einem Gegenstück (34) für den Verbinder (20), der zweiten Übertragungseinrichtung (22) und der Behälterhalterung (24) als Ganzes von dem Verbinder (20), der noch in einer Behältertransport- und/oder Behälterbehandlungsvorrichtung (10) montiert ist, mittels Entkoppeln des Verbinders (20) von dem Gegenstück (34).
